Europäisches Patentamt

European Patent Office

Office européen des brevets

(11) Veröffentlichungsnummer: **0 297 599**

**A2**

(12) **EUROPÄISCHE PATENTANMELDUNG**

(21) Anmeldenummer: 88110549.8

(51) Int. Cl.⁴: **H02G 3/22**

(22) Anmeldetag: 01.07.88

(30) Priorität: 03.07.87 DE 3721973
12.08.87 DE 3726777

(43) Veröffentlichungstag der Anmeldung:
04.01.89 Patentblatt 89/01

(84) Benannte Vertragsstaaten:
**DE ES FR GB IT SE**

(71) Anmelder: **Abele, Berthold W.**
**Am Schalkstein 21**
**D-7121 Walheim(DE)**

Anmelder: **Schollenberger, Gerd**
**Steinweg 5**
**D-7126 Sersheim(DE)**

(72) Erfinder: **Abele, Berthold W.**
**Am Schalkstein 21**
**D-7121 Walheim(DE)**
Erfinder: **Schollenberger, Gerd**
**Steinweg 5**
**D-7126 Sersheim(DE)**

(74) Vertreter: **Kohl, Karl-Heinz et al**
**Patentanwälte Dipl.-Ing. A.K. Jackisch-Kohl**
**Dipl.-Ing. K.H. Kohl Stuttgarter Strasse 115**
**D-7000 Stuttgart 30(DE)**

(54) **Dichtvorrichtung.**

(57) Mit der Dichtvorrichtung werden in Mauerdurchbrüchen (2) verlegte Kabel (1) abgedichtet. Sie hat
einen Durchlaß (15, 16) für das Kabel (1), in dem
eine Dichtung (19, 20) zum Abdichten des Kabels (1)
im Durchlaß (15, 16) angeordnet ist. Die Dichtvorrichtung hat außerdem eine Dichtung (7, 7') zur
Abdichtung der Durchführung ( 15, 16) im Bereich
außerhalb der Durchführung (2) an den Halteteilen
(4, 5). Durch die getrennte Abdichtung des Kabels
(1) und des Mauerdurchbruches (2) sowie seiner
Abdichtung außerhalb des Durchbruches (2) kann
eine einwandfreie Abdichtung auch bei unebenen
Begrenzungsflächen sichergestellt werden.

FIG. 1

EP 0 297 599 A2

## Dichtvorrichtung

Die Erfindung betrifft eine Dichtvorrichtung nach dem Oberbegriff des Anspruches 1.

Zur Abdichtung von in Mauerdurchbrüchen verlegten Telefonkabeln ist eine Dichtvorrichtung bekannt, bei der jeweils zwei nierenförmig ausgebildete Scheiben als Halteteile mit mehreren Stangen axial gegeneinander verspannt werden. Zwischen den Scheiben befindet sich eine plastisch verformbare Dichtmasse, die zuvor in den Rahmen zwischen dem Kabel und der Wandung des Mauerdurchbruches eingebracht worden ist. Beim Verspannen der Halteteile wird die Dichtmasse komprimiert. Es kommt dabei immer wieder vor, daß sich die Dichtmasse unkontrolliert im Durchbruch verteilt, so daß gegenüber der Wandung des Mauerdurchbruches, insbesondere infolge ihrer unebenen Ausbildung, keine einwandfreie Abdichtung gewährleistet werden kann.

Es ist ferner bekannt, einen faltenbalgartigen Kunststoffschlauch zur Kabelabdichtung zu verwenden. Er wird über das Kabel gestülpt und dann zusammengepreßt. Anschließend wird der Schlauch erwärmt, wobei er auf das Kabel aufschrumpft. Dabei kommt der Schlauch jedoch teilweise vom Mauerwerk frei, so daß infolge des vorhandenen Abstandes keine einwandfreie Abdichtung erreicht werden kann.

Der Erfindung liegt die Aufgabe zugrunde, eine Dichtvorrichtung der eingangs genannten Art so auszubilden, daß sowohl gegenüber dem Kabel als auch gegenüber den unebenen Begrenzungsflächen der Durchführung in einfacher Weise eine kontrollierbare, genau definierte und absolut gasdichte Abdichtung erreicht wird.

Diese Aufgabe wird bei einer Dichtvorrichtung der gattungsbildenden Art erfindungsgemäß mit den kennzeichnenden Merkmalen des Anspruches 1 gelöst.

Infolge der erfindungsgemäßen Ausbildung sind zwei voneinander unabhängige Dichtungen geschaffen, wobei mit der einen Dichtung das Kabel und mit der anderen Dichtung der Durchbruch abgedichtet werden. Durch diese getrennte Abdichtung ist es auf einfache Weise beispielsweise durch unterschiedliche Dichtmaterialien der Dichtungen möglich, eine sehr genaue, absolut sichere Abdichtung des Kabels und der Durchführung zu erreichen. Die Dichtung zur Abdichtung des Durchlasses wird nicht mehr im Durchbruch, sondern außerhalb der Durchführung angeordnet, so daß die Durchführung nicht genau gearbeitet sein muß, um eine einwandfreie Abdichtung zu erhalten. Zur Abdichtung der Durchführung kann infolge der getrennten Dichtungen eine wesentlich weichere Dichtung als zum Abdichten der Kabel verwendet werden.

Eine solche weiche Dichtung kann bei der axialen Verspannung der Halteteile einwandfrei in vorhandene unebene Stellen der jeweiligen Dichtfläche gepreßt werden. Die Dichtung zum Abdichten des Kabels läßt sich in der Wandung des Durchlasses ohne Schwierigkeiten definiert anordnen.

Weitere Merkmale der Erfindung ergeben sich aus den weiteren Ansprüchen, der Beschreibung und den Zeichnungen.

Die Erfindung wird nachstehend anhand zweier in den Zeichnungen dargestellter Ausführungsbeispiele näher beschrieben. Es zeigt:

Fig. 1 eine erfindungsgemäße Dichtvorrichtung teilweise im Axialschnitt und teilweise in Ansicht,

Fig.2 und 3 weitere Ausführungsformen einer erfindungsgemäßen Dichtvorrichtung in einer Darstellung entsprechend Fig. 1.

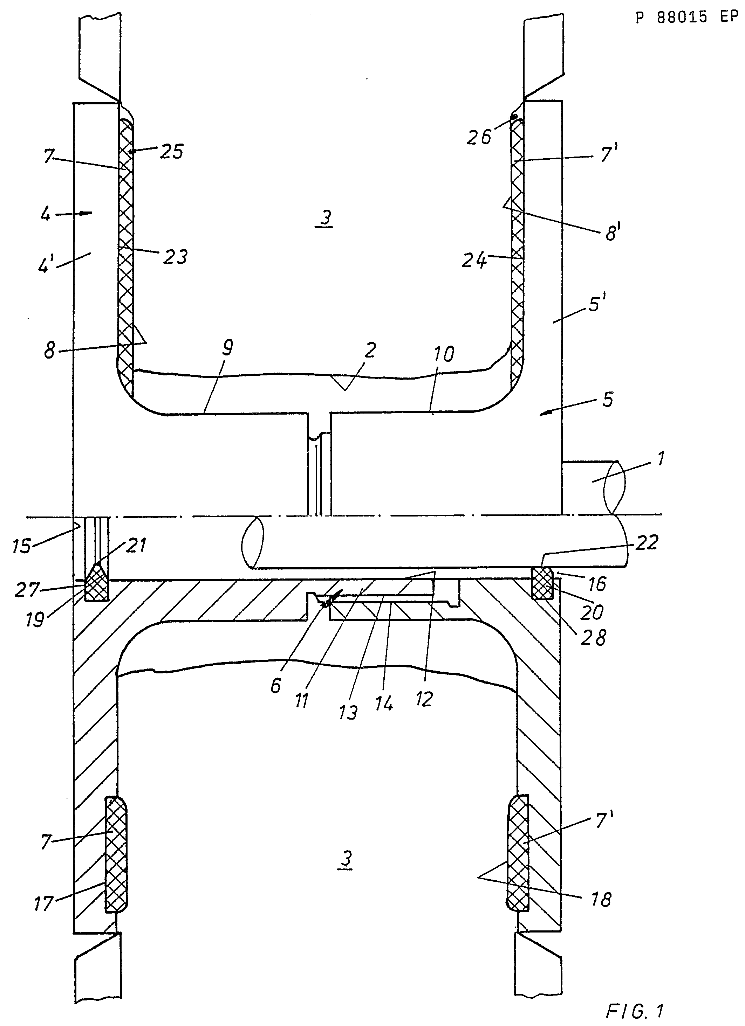

Die Dichtvorrichtungen nach den Fig. 1 bis 3 dienen zum gasdichten Abdichten eines Kabels 1, beispielsweise eines Telefonkabels, gegenüber einem Durchbruch 2 einer Mauer 3, durch den das Kabel geführt ist.

Die Dichtvorrichtung nach Fig. 1 hat einen ersten und einen zweiten Halteteil 4, 5, die über ein Spannteil 6 gegeneinander axial verspannt und mit Dichtteilen 7, 7′ an den unebenen Wänden 8, 8′ der Mauer 3 benachbart zum Durchbruch 2 dichtend anliegen.

Die Halteteile 4, 5 haben jeweils einen ringscheibenförmigen Flansch 4′, 5′, der quer von einem zentralen zylindrischen Steckteil 9, 10 absteht. Der Steckteil 9 hat einen im Außendurchmesser verjüngten Gewindeansatz 11, der in den Steckteil 10 geschraubt wird, der mit einem entsprechenden Innengewinde 14 versehen ist.

Der Gewindeansatz 11 mit dem Außengewinde 13 bildet den Spannteil 6, mit dem die beiden Halteteile 4, 5 axial gegeneinander verspannt werden.

Um die Durchführung des Kabels 1 durch den Gewindeansatz 11 nicht zu beeinträchtigen, ist der Steckteil 10 im Bereich des Innengewindes 14 mit einer Vertiefung 12 versehen, die so tief ist, daß die Innenwandung des Gewindeansatzes 11 und des Steckteiles 10 im Bereich außerhalb der Vertiefung 12 auf einem gemeinsamen Zylindermantel liegen. Das Kabel 1 läßt sich dann problemlos durch die miteinander verspannten Halteteile 4, 5 - schieben. Das Kabel 1 ist durch die miteinander fluchtenden Öffnungen 15 und 16 der Halteteile 4, 5 hindurchgeführt. Zur Abdichtung des Kabels 1 gegenüber den Halteteilen 4, 5 ist in Höhe der Flansche 4′, 5′ jeweils eine Dichtung 19, 20 vorgesehen. Sie sind vorzugsweise als Lippendichtungen ausgebildet. Die Dichtungen 19, 20 weisen jeweils eine Dichtlippe 21, 22 auf, die (vgl. die rechte Hälfte in Fig. 1) unter elastischer Verformung am Kabel 1 anliegt. Die als Rund-oder Vierkantring ausgebildeten Dichtungen 19, 20 haben eine lichte Weite, die kleiner ist als der Außendurchmesser des Kabels 1. Beim Durchschieben des Kabels werden darum die Dichtungen 19, 20 so elastisch verformt, so daß auch Unrundheiten an der Kabelaußenwand einwandfrei abgedichtet werden. Die Dichtungen 19, 20 sind jeweils in einer Ringnut 27, 28 in der Innenseite der Halteteile 4, 5 angeordnet. Sie können in diese Ringnuten lose eingesetzt oder auch in ihnen befestigt sein, beispielsweise durch Kleben, Anvulkanisieren oder durch eine chemische Bindung.

Anstelle der Dichtungen 19, 20 mit nur einer Dichtlippe können auch Dichtungen mit zwei, drei oder mehreren Dichtlippen vorgesehen sein, die auch unterschiedliche Form aufweisen können. Die größere Zahl von Dichtlippen gewährleistet eine einwandfreie Dichtheit durch eine noch bessere Anlage, insbesondere bei Unrundheiten, am Kabel.

Die Dichtteile 7, 7′ können durch eine Kunststoff- oder Silikon-Flachringdichtung gebildet sein, die an den einander zugewandten Innenseiten 23, 24 der Flansche 4′, 5′ in einer umlaufenden Nut 17 und 18 angeordnet sind. Die Dichtteile 7, 7′ können lose in den Nuten 17, 18 angeordnet oder auch in ihnen befestigt sein, beispielsweise durch Kleben oder durch chemische Bindung. Sie können aus einer plastisch verformbaren Dichtmasse oder aus einem elastisch verformbaren Formteil bestehen. Die Dichtteile sind verhältnismäßig weich ausgebildet, damit sie sich in die Unebenheiten der Maueraußenwände 25, 26 dicht einpressen lassen. Beim Verspannen der Halteteile 4, 5 werden die Dichtteile 7, 7′ fest zwischen den Flanschen 4′, 5′ und der Maueraußenwand 25, 26 zusammengedrückt und dabei elastisch oder plastisch verformt. Die Verspannung wird so eingestellt, daß die Unebenheiten in den Maueraußenwänden 25, 26 von den Dichtteilen 7, 7′ ausgefüllt werden. Ein Zutritt von Schadstoffen und Gasen in den Durchbruch 2 wird dadurch zuverlässig verhindert. Die Dichtteile 7, 7′ und die Dichtringe 19, 20 können je nach Einsatzzweck so ausgebildet werden, daß sie eine optimale Abdichtung sicherstellen.

Zum Abdichten des durch den Mauerdurchbruch 2 geführten Kabels 1 werden zunächst die Halteteile 4, 5 mit den Steckteilen 9, 10 von beiden Seiten in den Durchbruch 2 gesteckt und dann der Gewindeansatz 11 durch Drehen zumindest des einen Halteteiles 4 oder 5 in den Steckteil 10 geschraubt. Die Steckteile 9, 10 sind auf den voneinander abgewandten Außenseiten mit (nicht dargestellten) Stecköffnungen versehen, in die zum Drehen des oder der Halteteile ein entsprechendes Werkzeug gesteckt werden kann. Hierbei werden die Dichtteile 7, 7′ unter elastischer Verspannung zwischen den Halteteilen 4, 5 und den Mauerwänden 25, 26 eingeklemmt bzw. bei einer Dichtmasse eingepreßt, so daß der Mauerdurchbruch 2 einwandfrei und gasdicht nach außen und innen abgedichtet ist. Dann wird das Kabel 1 durch die Öffnungen 15 und 16 der Dichtvorrichtung geschoben. Die Dichtringe 19, 20 liegen dann dichtend am Kabel an, so daß auch zwischen der Dichtvorrichtung und dem Kabel 1 keine Leckagen und Undichtheiten auftreten können. Durch die Anordnung der Dichtungen 19, 20 kann das Kabel 1 bei Bedarf auch jederzeit wieder aus dem Mauerdurchbruch herausgezogen und gegen ein anderes Kabel ausgetauscht werden, ohne daß die Dichtvorrichtung selbst demontiert werden muß.

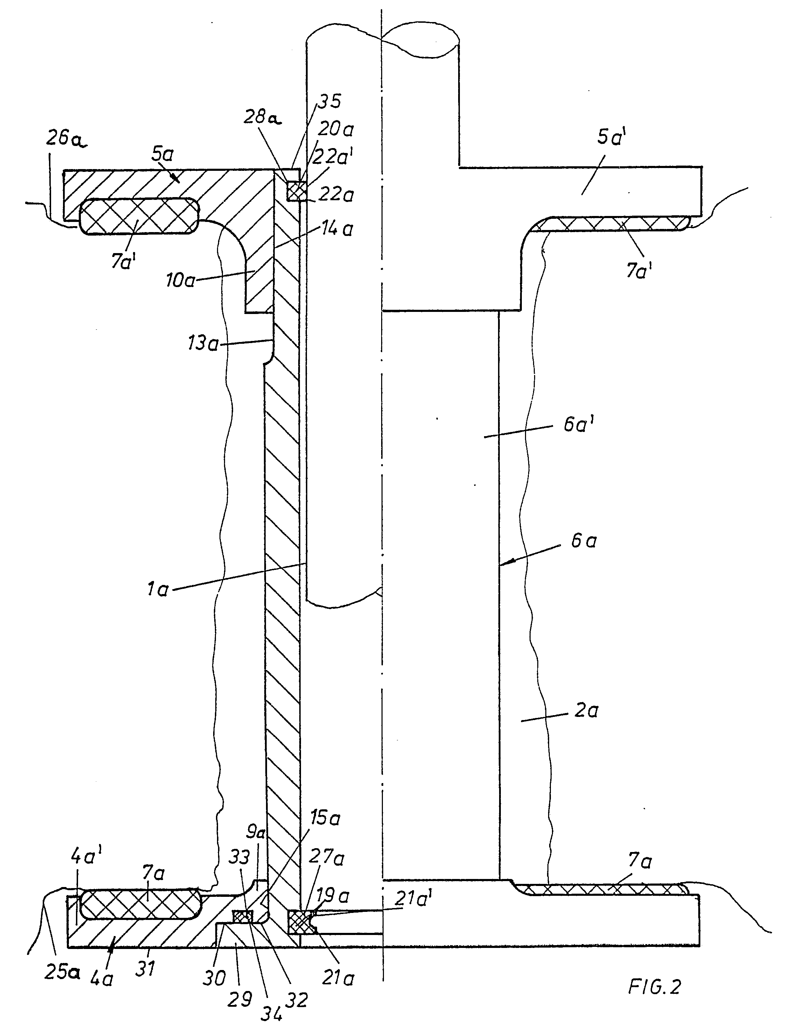

Die Dichtvorrichtung nach Fig. 2 unterscheidet sich im wesentlichen dadurch von der zuvor beschriebenen Dichtvorrichtung, daß der Spannteil 6a als gesondertes, rohrförmiges Teil ausgebildet ist, das zweckmäßigerweise wesentlich länger ist als die Steckteile 9, 10 des Spannteiles 6 nach Fig. 1.

Das Spannteil 6a besteht im wesentlichen aus einem Rohr 6a′ mit einem endseitigen Flansch 29, mit dem das Spannteil in einer Vertiefung 30 des Halteteiles 4a formschlüssig angeordnet ist. Die Vertiefung 30 liegt auf der vom Halteteil 5a abgewandten Außenseite 31 des halteteiles 4a und erstreckt sich von der Öffnung 15a des Steckteiles 9a aus bis in den Flansch 4a′. Im Boden 32 der Vertiefung 30 befindet sich eine Ringnut 33 zur Aufnahme eines Dichtringes 34, der das Halteteil 4a gegenüber dem Spannteil 6a abdichtet und dichtend am Flansch 29 des Spannteiles anliegt. In Höhe des Flansches 29 weist das Spannteil 6a in seiner Innenwandung die Ringnut 27a zur Aufnahme der Dichtung 19a auf, die das Kabel 1a gegenüber dem Spannteil 6a abdichtet.

Wie bei der zuvor beschriebenen Ausführungsform ist das Spannteil 6a am freien Ende 35 des Rohres 6a mit einer innenseitigen Ringnut 28a versehen, in der die Dichtung 20a liegt. Die Dichtungen 19a, 20a weisen jeweils zwei mit axialem Abstand hintereinander liegende Dichtlippen 21a, 21a′, 22a, 22a′ auf. Das Rohrende 35 hat ein Außengewinde 13a. Das Steckteil 10a des Halteteiles 5a weist wiederum ein Innengewinde 14a auf. Die Halteteile 4a, 5a liegen wie die Halteteil 4, 5 gem. Fig. 1 mit ihren Flanschen 4a′, 5a′ unter Zwischenlage jeweils eines ringförmigen Dichtteiles 7a, 7a′, an der zugehörigen Maueraußenwand 25a, 26a an. Anstelle der ringförmigen, also Formteil ausgebildeten, elastisch verformbaren Dichtteile kann auch, wie beim zuvor beschriebenen Ausführungsbeispiel, eine plastisch verformbare Dichtmasse verwendet werden.

Zur Abdichtung des Kabels 1a wird das Rohr 6a′ des Spannteiles 6a durch das kurze Steckteil 9a des Halteteiles 4a gesteckt. Das Rohr wird dann von einer Seite in den Mauerdurchbruch 2a gesteckt. In das andere Ende des Durchbruches 2a wird das Halteteil 5a gesteckt. Das Rohr 6a′ ist so lang, daß es in das Steckteil 10a des Halteteiles 5a geschraubt werden kann. Bei diesem Schraubvorgang werden die Halteteile 4a, 5a mit ihren Flanschen 4a′, 5a′ über den Flansch 29 und die ineinandergreifenden Gewinde 13a, 14a gegen die Maueraußenwände 25a, 26a gezogen. Die Dichtteile 7a, 7a′ werden hierbei in der beschriebenen Weise so verformt, daß sie Unebenheiten in den Maueraußenwänden einwandfrei ausfüllen. Dadurch ist wieder eine einwandfreie, absolut sichere Abdichtung der Dichtvorrichtung gegenüber dem Mauerdurchbruch 2a erreicht, so daß keine Gase und sonstige Stoffe durch die Dichtvorrichtung nach außen oder innen in das Mauerwerk gelangen können. Beim Verschrauben wird der Dichtring 34 durch den Flansch 29 des Spannteiles 6a elastisch verformt, so daß der Flansch 29 zuverlässig gegen das Halteteil 4a abgedichtet ist. Schließlich wird das Kabel 1a durch das Spannteil 6a geschoben. Die Dichtlippen 21a, 21a′; 22a, 22a′ werden dabei elastisch verformt und dichten das Kabel 1a einwandfrei ab. Da jede Dichtung 19a, 20a jeweils zwei Dichtlippen aufweist, ist eine absolut sichere Abdichtung selbst bei größeren Unrundheiten des Kabels 1a sichergestellt.

Bei dieser Ausführungsform kann durch Verwendung unterschiedlich langer Spannteile 6a auf einfache Weise eine Anpassung an beliebig lange Mauerdurchbrüche 2a erreicht werden. Die Halteteile 4a, 5a müssen hierbei nicht verändert werden. Die Vorrichtung läßt sich kostengünstig herstellen, da die Halteteile 4a, 5a als einfache Ringteile ausgebildet sind, die für unterschiedlich lange Spannteile verwendet werden können. Auch das Spannteil 6a ist wirtschaftlich herstellbar. Das Spannteil 6a ist wiederum mit (nicht dargestellten) Stecköffnungen für Werkzeuge versehen, mit denen das Spannteil beim Verschrauben um seine Achse gedreht werden kann.

Bei den zuvor beschriebenen Ausführungsformen kann der Mauerdurchbruch 2, 2a grob hergestellt werden, weil die Abdichtung außerhalb des Mauerdurchbruches an den Maueraußenwänden 25, 26, 25a, 26a mit den Dichtteilen 7, 7′, 7a, 7a′ erfolgt. Die Flansche 4′, 5′; 4a′, 5a′ der Halteteile 4, 5; 4a, 5a sind vorteilhaft so dünn, daß sie unter Putz gelegt werden können. Da die Dichtungen 19, 20, 19a, 20a im Bereich der Enden der Öffnungen 15, 16; 15a, 16a der Halteteile 4,5; 4a, 5a liegen, können sie leicht optisch kontrolliert werden, ob sie das Kabel 1, 1a über dessen Umfang einwandfrei abdichten.

Die axiale Verspannung der Halteteile 4, 5; 4a, 5a kann auch durch Zugschrauben erreicht werden.

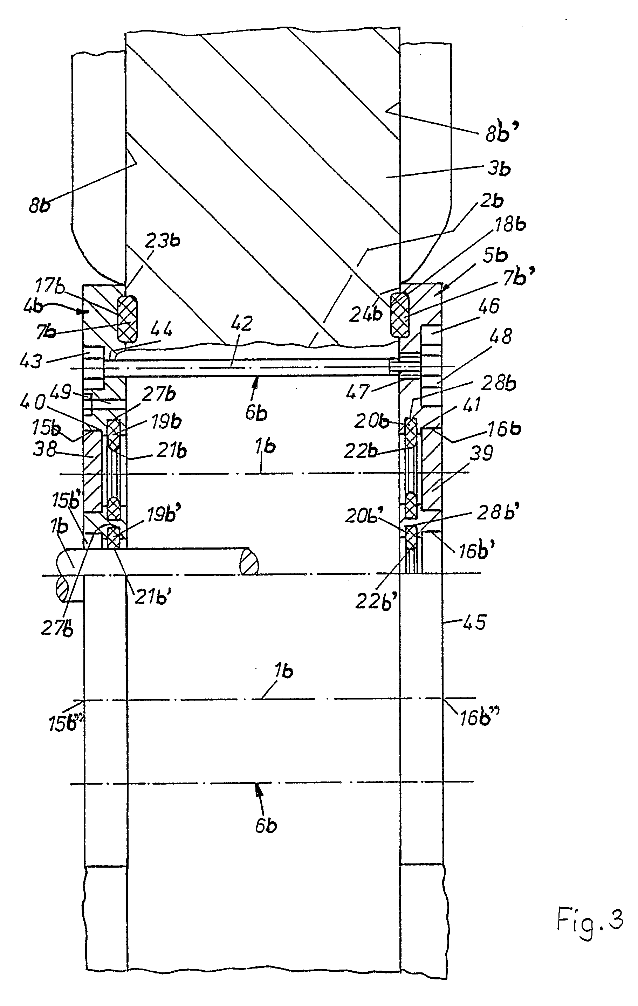

Die Dichtvorrichtung nach Fig. 3 hat zwei Halteteile 4b und 5b, die über Spannteile 6b gegeneinander axial verspannt und mit den Dichtteilen 7b, 7b′ an den unebenen Wänden 8b, 8b′ der Mauer 3b benachbart zum Durchbruch 2b dichtend anliegen. Die Halteteile 4b, 5b sind jeweils ringscheibenförmig und plattenförmig ausgebildet. Sie haben jeweils mehrere, im Ausführungsbeispiel jeweils drei miteinander fluchtende Öffnungen 15b, 15b′, 15″, 16b, 16b′, 16b″, durch welche Kabel 1b hindurchgeführt werden können. In Fig. 3 ist nur eines der Kabel 1b deutlich gezeichnet.

Vorteilhaft sind die Öffnungen zunächst geschlossen, beispielsweise durch Blindstopfen. Besonders vorteilhaft ist es, an den Stellen der Öffnungen Sollbruchstellen vorzusehen, so daß je nach Bedarf die jeweilige Öffnung bei der Montage der Dichtvorrichtung durch Durchbrechen des Halteteiles 4b, 5b geöffnet werden kann. Im dargestellten Ausführungsbeispiel sind in die Öffnungen Stopfen 38, 39 eingesetzt, die bei Bedarf einfach herausgezogen werden können. Damit die Stopfen 38, 39 nicht durch die Öffnungen 15b, 15b′, 15b″, 16b, 16b′, 16b″ hindurchrutschen, sind die Öffnungen auf ihren voneinander abgewandten Seiten im Durchmesser erweitert, so daß die Stopfen auf einer Schulter 40, 41 aufliegen.

Zur Abdichtung des Kabels 1b gegenüber den Halteteilen 4b, 5b ist in Höhe der Öffnungen 15b, 15b′, 15b″, 16b, 16b′, 16b′ · jeweils eine Dichtung 19b, 19b′, 20b, 20b′ vorgesehen. Die Dichtungen sind vorzugsweise als Lippendichtungen ausgebildet, die jeweils eine Dichtlippe 21b, 21b′, 22b, 22b′ aufweisen, die unter elastischer Verformung am Kabel 1b anliegen. Die als Rund- oder Vierkantring ausgebildeten Dichtungen 19b, 19b′, 20b, 20b′ haben eine lichte Weite, die kleiner ist als der Außendurchmesser des Kabels 1b. Beim Durchschieben des Kabels durch die jeweiligen Öffnungen werden darum die Dichtungen 19b, 19b′, 20b, 20b′ so elastisch verformt, daß auch Unrundheiten an der Kabelaußenwand einwandfrei abgedichtet werden.

Die Dichtungen 19b, 19b′, 20b, 20b′, sind jeweils in einer Ringnut 27b, 27b′, 28b, 28b′ in der Wandung der Öffnungen 15b, 15b′, 15b′, 16b, 16b′, 16b″ angeordnet. Die Dichtungen können in diese Ringnuten 27b, 27b′, 28b, 28b′ lose eingesetzt oder auch in ihnen befestigt sein, beispielsweise durch Kleben, Anvulkanisieren oder auch durch chemische Bindung.

Anstelle der Dichtungen 19b, 19b′, 20b, 20b′ mit nur einer Dichtlippe können auch Dichtungen mit zwei, drei oder mehreren Dichtlippen vorgesehen sein, die auch unterschiedliche Form aufweisen können. Die größere Zahl von Dichtlippen gewährleistet eine einwandfreie Dichtheit durch eine noch bessere Anlage, insbesondere bei Unrundheiten, am Kabel 1b.

Die ringförmigen Dichtteile 7b, 7b' können durch eine Kunststoff- oder Silikon-Flachringdichtung gebildet sein, die an den einander zugewandten Innnenseiten 23b und 24b der Halteteile 4b, 5b in einer umlaufenden Nut 17b und 18b angeordnet sind. Die Dichtteile 7b, 7b' können lose in den Nuten 17b, 18b oder auch fest in ihnen angeordnet sein, beispielsweise durch Kleben oder durch chemische Bindung. Die Dichtteile 7b, 7b' können aus einer plastisch verformbaren Dichtmasse oder aus einem elastisch verformbaren Formteil bestehen. Sie sind verhältnismäßig weich ausgebildet, damit sie sich in die Unebenheiten der Maueraußenwände 8b, 8b' dicht einpressen lassen. Beim Verspannen der Halteteile 4b, 5b werden die Dichtteile 7b, 7b' fest zwischen ihnen und den Mauerwänden 8b, 8b' zusammengepreßt und dabei elastisch oder plastisch verformt. Die Verspannung wird so eingestellt, daß die Unebenheiten in den Mauerwänden 8b, 8b' im Bereich der Dichtteile 7b, 7b' mit ihnen ausgefüllt werden. Ein Zutritt von Schadstoffen und Gasen in den Durchbruch durch den Bereich zwischen den Mauerwänden 8b, 8b' und den Halteteilen 4b, 5b wird dadurch zuverläs-sig verhindert. Die Dichtteile 7b, 7b' und die Dichtungen 19b, 19b', 20b, 20b' können je nach Einsatzzweck so ausgebildet werden, daß sie eine optimale Abdichtung sicherstellen. Die Spannteile 6b haben jeweils eine an ihrem Ende mit Gewinde versehene Stange 42. Der Halteteil 4b weist eingegossene Muttern 43 auf, in welche das eine Gewindeende der Stangen 42 geschraubt wird. Der Halteteil 4b ist hierzu mit entsprechenden Durchsteck-köffnungen 44 für die Stangenenden versehen. Da die Muttern 43 fest im Halteteil 4b vorgesehen sind, können sie bei der Lägerung und bei der Montage der Dichtvorrichtung auch nicht verloren gehen. Da die Muttern 43 außerdem drehfest im Halteteil 4b sitzen, lassen sich die Stangen 42 einfach in die Muttern 43 schrauben. Die Muttern 43 liegen vorteilhaft versenkt im Halteteil 4b, so daß sie nicht über ihn ragen.

Der andere Halteteil 5b weist auf seiner vom Halteteil 4b abgewandten Außenseite 45 Vertiefungen 46 auf, in die jeweils eine Durchsteköffnung 47 für das andere Gewindeende der Stange 42 mündet. Die Vertiefung 46 nimmt eine Mutter 48 auf, die auf das entsprechende Gewindeende der Stange 42 geschraubt wird. Damit die Mutter 48 in der Vertiefung 46 gedreht werden kann, ist der Durchmesser der Vertiefung größer als die Mutternbreite.

Bei der Montage der Dichtvorrichtung werden zunächst die Stangen 42 in die Muttern 43 des Halteteiles 4b geschraubt. Anschließend wird der halteteil 5b an die gegenüberliegende Mauerwand angelegt, wobei die anderen Gewindeenden der Stangen 42 durch die Stecköffnungen 47 des Halteteiles 5b ragen. Auf diese Gewindeenden werden dann die Muttern 48 geschraubt. Die beiden Halteteile 4b, 5b werden somit fest axial gegeneinander verspannt. Die Spannteile 6b sind vorzugsweise gleichmäßig über den Umfang der Halteteile 4b, 5b verteilt angeordnet, so daß sie gleichmäßig axial gegeneinander verspannt werden können. Beim Spannvorgang werden die Dichtteile 7b, 7b', die axial aus den Nuten 17b, 18b ragen, unter elastischer Verspannung zwischen den Halteteilen und den Mauerwänden 8b, 8b' eingeklemmt bzw. bei einer Dichtmasse eingepreßt, so daß der Mauerdurchbruch 2b einwandfrei und gasdicht nach außen und innnen abgedichtet ist. Anschließend werden die Stopfen 38, 39 aus den jeweiligen Öffnungen 15b, 15b', 15b'', 16b, 16b', 16b'' herausgenommen und die entsprechenden Kabel 1b durch diese Öffnungen geschoben. Die nicht benötigten Öffnungen bleiben durch die Stopfen 38, 39 dicht verschlossen. Die Dichtungen 19b, 19b', 20b, 20b' liegen dichtend am Kabel 1b an, so daß auch zwischen der Dichtvorrichtung und dem Kabel keine Leckagen und Undichtheiten auftreten können.

Durch die Anordnung der Dichtungen 19b, 19b', 20b, 20b' kann das Kabel 1b bei Bedarf jederzeit wieder aus dem Mauerdurchbruch 2b herausgezogen und gegen ein anderes Kabel ausgetauscht werden, ohne daß die Dichtvorrichtung selbst demontiert werden muß.

Damit die Kabel 1b im Bereich zwischen den beiden Dichtteilen 4b, 5b fest gehalten werden, kann der Bereich zwischen den Halteteilen und der Wand des Mauerdurchbruches 2b vorzugsweise ausgeschäumt werden. Der Schaum läßt sich durch im Halteteil 4b und/oder im Halteteil 5b vorgesehene Einspritzöffnungen 49 einführen, die nach außen abgedichtet sind. Nach dem Erhärten des Schaumes im Bereich zwischen der Wand des Durchbruches 2b und den Halteteilen 4b, 5b werden das oder die Kabel 1b im Bereich zwischen den Halteteilen einwandfrei gehaltert, so daß unerwünschte Bewegungen des (der) Kabel zuverlässig verhindert werden.

Die Dichtvorrichtung läßt sich sehr einfach montieren. Die Stangen 42 lassen sich an Ort und Stelle auf die Dicke der Mauer 3b bzw. auf die Länge des Durchbruches 2b zuschneiden.

Die Dichtvorrichtung weist zwei voneinander unabhängige Dichtungen auf, von denen mit der einen Dichtung 19b, 19b', 20b, 20b' das Kabel 1b und mit der anderen Dichtung 7b, 7b' der Durchbruch 2b abgedichtet werden. Infolge dieser getrennten Abdichtung ist es auf einfache Weise beispielsweise durch unterschiedliche Dichtmaterialien für die Dichtungen möglich, eine sehr genaue, absolut sichere Abdichtung des Kabels 1b und des Durchbruches 2b zu erreichen. Die Dichtteile 7b, 7b' sind im Bereich des Durchbruches 2b angeordnet, so daß der Durchbruch selbst nicht genau gearbeitet sein muß, um eine einwandfreie Abdichtung zu erhalten.

Die Halteteile 4b, 5b lassen sich einfach und kostengünstig herstellen, so daß die gesamte Dichtvorrichtung äußerst kostengünstig ist. Auch die Montage der Dichtvorrichtung ist sehr einfach durchzuführen, so daß sie auch von ungeübten Kräften einwandfrei montiert werden kann. Die Halteteile 4b, 5b sind vorteilhaft so dünn, daß sie unter Putz gelegt werden können. Da die Dichtungen 19b, 19b', 20b, 20b' in den Halteteilen liegen, können sie leicht von außen optisch kontrolliert werden, ob sie das Kabel 1b über dessen Umfang einwandfrei abdichten.

Die Halteteile 4b, 5b weisen im Ausführungsbeispiel drei nebeneinanderliegende Öffnungen 15b, 15b', 15b'', 16b, 16b', 16b'' auf. Je nach Zahl der hindurchzuführenden Kabel 1b können auch nur zwei oder auch mehr als drei Öffnungen vorgesehen sein. Diese Öffnungen können in einer Reihe nebeneinander oder je nach den Anforderungen auch verteilt in den Halteteilen 4b, 5b vorgesehen sein.

Die Dichtvorrichtung kann überall dort eingesetzt werden, wo Kabel durch Öffnungen hindurchgeführt werden sollen, beispielsweise durch Wände, durch Decken, durch Platten und dgl. Mit der Ausführungsform gemäß Fig. 3 können mehrere Kabel gleichzeitig abgedichtet werden. Infolge der plattenförmigen Ausbildung der Halteteile 4b, 5b hat die Dichtvorrichtung einen konstruktive einfachen Aufbau und läßt sich ohne Schwierigkeiten montieren.

## Ansprüche

1. Dichtvorrichtung zum Abdichten von Kabeln (1; 1a, 1b) oder dgl. gegenüber einer Durchführung (2; 2a, 2b) sowie zum Abdichten der Durchführung selbst, mit zwei über mindestens ein Spannteil (6; 6a, 6b) axial gegeneinander verspannbaren Halteteilen (4, 5; 4a, 5a, 4b, 5b) sowie mit mindestens einer Dichtung (7; 7', 7a, 7a', 7b, 7b',19, 20; 19a, 20a, 19b, 19b', 20b, 20b'), dadurch gekennzeichnet, daß die Dichtvorrichtung zumindest einen Durchlaß (15, 16; 15b, 15b', 15b'', 16b, 16b') für das Kabel (1; 1a, 1b) aufweist, und daß die Dichtung (19, 20; 19a,20a, 19b, 19b', 20b, 20b') zur Abdichtung des Kabels (1; 1a, 1b) im Durchlaß (15, 16; 15b, 15b' 15b'', 16b, 16b', 16b'') und die Dichtung (7, 7'; 7a, 7a'; 7b, 7b') zur Abdichtung der Durchführung (2; 2a, 2b) im Bereich außerhalb der Durchführung an den Halteteilen (4, 5; 4a, 5a; 4b, 5b) vorgesehen sind.

2. Vorrichtung nach Anspruch 1, dadurch gekennzeichnet, daß das Kabel (1; 1a) durch das Spannteil (6; 6a) geführt ist.

3. Vorrichtung nach Anspruch 1 oder 2, dadurch gekennzeichnet, daß das Spannteil (6) durch einen Gewindeansatz (11) des einen Halteteiles (4) gebildet ist, der in das andere Halteteile (5) schraubbar ist.

4. Vorrichtung nach Anspruch 1 oder 2, dadurch gekennzeichnet, daß das Spannteil (6a) ein mit den Halteteilen (4a, 5a) verbundenes Rohr (6a') aufweist.

5. Vorrichtung nach einem der Ansprüche 1 bis 4, dadurch gekennzeichnet, daß die Halteteilen (4, 5; 4a, 5a) jeweils ein hülsenförmiges Steckteil (9, 10; 9a, 10a) und vorzugsweise jeweils einen Flansch (4', 5'; 4a', 5a') aufweisen, mit dem sie an einer an die Durchführung (2; 2a) anschließenden Wand (25, 26; 25a, 26a) anliegen und in deren Höhe vorzugsweise die Dichtungen (19, 20; 19a, 20a) zur Abdichtung des Kabels (1; 1a) liegen.

6. Vorrichtung nach einem der Ansprüche 1 bis 5, dadurch gekennzeichnet, daß die Dichtungen (19,20; 19a, 20a, 19b,19b'; 20b, 20b') zum Abdichten des Kabels (1; 1a, 1b) jeweils durch eine Lippendichtung gebildet sind.

7. Vorrichtung nach Anspruch 5 oder 6, dadurch gekennzeichnet, daß die Dichtung (7, 7'; 7a, 7a') zur Abdichtung der Durchführung (2; 2a) an der der Wand (25, 26; 25a, 26a) zugewandten Seite des Flansches (4', 5'; 4a', 5a') der Halteteile (4, 5; 4a, 5a) angeordnet sind, vorzugsweise in einer Ringnut(17, 18).

8. Vorrichtung nach einem der Ansprüche 4 bis 7, dadurch gekennzeichnet, daß das Rohr (6a') des Spannteiles (6a) einen endseitigen Flansch (29) aufweist, mit dem es dichtend an dem einen Halteteile (4a) anliegt, daß das Rohr (6a') vorzugsweise an seinem anderen Ende ein Außengewinde (13a) aufweist, mit dem es in das Steckteil (10a) des anderen Halteteiles (5a) geschraubt und an einem im Außendurchmesser verjüngten Endabschnitt (35) des Rohres (6a') vorgesehen ist.

Vorrichtung nach einem der Ansprüche 1 bis 8, dadurch gekennzeichnet, daß die Halteteile (4b, 5b) plattenförmig ausgebildet sind und jeweils mehrere Durchlässe (15b, 15b', 15b''; 16b, 16b', 16b'') für die Kabel (1b) aufweisen.

10. Vorrichtung nach Anspruch 9, dadurch gekennzeichnet, daß die Spannteile (6b) durch Stangen (42) gebildet sind, die zumindest an ihren Enden mit Gewinden versehen und in an den Halteteilen (4b, 5b) vorgesehene Muttern (43, 48) geschraubt sind, von denen vorzugsweise die Muttern (43) des einen Halteteiles (4b) fest mit ihm verbunden, insbesondere verdrehfest im Halteteil angeordnet sind.

11. Vorrichtung nach Anspruch 9 oder 10, dadurch gekennzeichnet, daß die Muttern (48) des anderen Halteteiles (5b) in jeweils einer Vertiefung (46) liegen.

12. Vorrichtung nach einem der Ansprüche 9 bis 11, dadurch gekennzeichnet, daß die Durchlässe (15b, 15b', 15b"; 16b, 16b', 16b") durch Stopfen (38, 39) oder durch aus den Halteteilen (4b, 5b) über Sollbruchstellen heraustrennbare Abschnitte verschließbar sind.

13. Vorrichtung nach einem der Ansprüche 9 bis 12, dadurch gekennzeichnet, daß die Dichtungen (19b, 19b'; 20b, 20b') zur Abdichtung der Kabel (1b) in den Durchlässen (15b, 15b', 15b"; 16b, 16b', 16b") angeordnet sind.

14. Vorrichtung nach einem der Ansprüche 1 bis 13, dadurch gekennzeichnet, daß zumindest der eine Halteteil (4b) mindestens eine verschließbare Einspritzöffnung (49) aufweist.

15. Vorrichtung nach einem der Ansprüche 1 bis 14, dadurch gekennzeichnet, daß der Bereich zwischen den Halteteilen (4b, 5b) in der Einbaulage ausgeschäumt ist.

FIG. 1

FIG.2

Fig.3